# EUROPEAN PATENT APPLICATION

(11) **EP 4 439 209 A2**
(43) Date of publication of application: **02.10.2024**
(21) Application number: 24166012.5
(22) Date of filing: 25.03.2024
(51) Int. Cl.: G05B 19/418, B65B 57/00

(54) **COMPUTER-IMPLEMENTED METHOD FOR SUPPORTING AN OPERATION OF A PACKAGING LINE, CORRESPONDING DEVICE, COMPUTER PROGRAM PRODUCT AND PACKAGING LINE**

(30) Priority: 30.03.2023 IT 202300006210
(71) Applicant: Tetra Laval Holdings & Finance S.A., 1009 Pully (CH)
(72) Inventor: VERASANI, Mattia, 41123 MODENA (IT); ARENA, Marco, 41123 MODENA (IT); SCARABELLI, Paolo, 41123 MODENA (IT); FIORANI, Lorenzo, 41123 MODENA (IT); FRANCHINI, Giorgia, 41123 MODENA (IT); CAVICCHIOLI, Roberto, 41123 MODENA (IT); CAVICCHIOLI, Paolo, 41123 MODENA (IT); BERTOGNA, Marko, 41123 MODENA (IT)
(74) Representative: Tetra Pak - Patent Attorneys SE

(57) **Abstract**

There is described a computer-implemented method of supporting an operation of a packaging line (1) producing packages (3), comprising:
- receiving (1000) production data (PD) automatically collected during the operation of at least part of the packaging line (1),
- applying (1002) a machine learning model (42), wherein the machine learning model (42) receives as an input the production data (PD) and outputs a prediction of defects on packages (3) produced in the packaging line (1), wherein the machine learning model (42) has been trained by means of reference production data (RPD) indicative of defects on reference packages associated with the reference production data (RPD).

## Description

### TECHNICAL FIELD

The present invention relates to a method for predicting defects in packaging containers, in particular composite packages filled with a pourable food product. The present invention also relates to a corresponding predictor device and a corresponding packaging line.

### BACKGROUND ART

As is known, many liquid, semi-liquid or pourable food products, such as fruit juice, UHT (ultra-high-temperature treated) milk, wine, tomato sauce, etc., are distributed and marketed in composite packages made of a multilayer composite packaging material.

A typical example is the parallelepiped-shaped package for pourable food products known as Tetra Brik Aseptic^{™}, which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Composite packages of this sort are normally produced within fully automatic filling (or, also denoted as, packaging) production lines, which at least form the composite packages starting from a web of multilayer composite packaging material (wound from a reel) and fill the composite packages with the pourable food product.

A typical packaging line comprises at least a filling machine, which forms the composite packages from the multilayer composite packaging material and fills the composite packages with the pourable food product. Additionally, packaging lines may also comprise downstream treatment equipment, receiving the composite packages from the filling machine and executing additional treatments on the composite packages; the downstream treatment equipment may for example comprise one or more of a buffer unit for temporarily buffering the composite packages; an application unit for applying e.g. straws on the composite packages; a grouping unit, e.g. a palletizer unit, for grouping a plurality of composite packages together in a storing unit (such as a pallet).

In particular, the multilayer composite packaging material is generally provided in the form of a web, in particular being wound up on a packaging material reel, from which it is fed through the filling machine, wherein a tube is formed from the web by producing a longitudinal sealing. The liquid food product is fed into the tube via a pipe; a lower end of the tube is then fed into a folding device, in which a transversal sealing is produced, the tube being folded according to folding lines, also referred to as weakening lines, and then cut off such that the composite packages filled of the liquid food product are formed.

Defect monitoring and detection is important in such production lines, and particularly so in the manufacturing of the composite packages for pourable food products, due to the very high speeds used to increase the throughput of the production line.

Hence, it is desirable to develop efficient systems and procedures for identification of possible faulty behavior of the machines in such packaging lines that may result in various types of defects in the produced packaging containers, in order to configure optimal operating settings and ensure a desired performance over a period of time. It is equally desirable to develop such systems and procedures with a minimum impact on the production.

### DISCLOSURE OF INVENTION

It is an object of the present solution to provide an improved solution allowing to satisfy, at least in part, the above-mentioned need.

According to the present solution, a method is provided, able to predict defects in packaging containers formed in a packaging line, as defined in the appended claims. According to the present solution, it is also provided a predictor device comprising a processing unit configured to carry out the method according to one or more embodiments. Also, it is provided a packaging line comprising a predictor device according to one or more embodiments.

The packaging line preferably comprises one or more of:
- a plurality of sensors positioned along the packaging line, and/or
- a plurality of actuators configured to perform operations as a function of operative signals indicative of settings of the packaging line and/or events in the packaging line, and/or
- during a training and/or validation phase of the machine learning model, an image acquisition device and an image analysis unit.

The use of a machine learning model is particularly advantageous in case of prediction of physical defects in packaging lines insofar as the amount of (raw) data is significant. As such, a deterministic approach may not lead to a functioning model based on the production data. In particular, a mathematical approximation, e.g. based on mathematical functions, wherein certain variables can be calculated and used to identify defective packages, may not be possible, insofar as the relationship between all the relevant data is not easily introduced into a mathematical/statistical model.

The machine learning model is data-driven. Under certain circumstances, a data-driven approach can result in a more accurate prediction with respect to a rule-based approach. A rule-based approach relies on the identification of a number of anomaly ranges and/or rules. Such approaches may be limited to known interaction between settings/parameters in that they are driven by human intellect. Accordingly, the machine learning model is an efficient tool to obtain a more accurate and robust quality prediction insofar as the machine learning model thanks to the type of input data and/or the training, may find new and useful correlations in the data.

In data-driven models, the rules are decided independently based on the training data. Accordingly, the rules are not introduced externally by human interaction; on the contrary, the rules are generated by the model during training.

Thanks to the introduction of a machine learning model according to one or more embodiments, it is possible to obtain real-time and continuous monitoring of the packages produced in the packaging line, even considering the high speeds usually associated with the packaging lines. It will be appreciated that all the produced packages may be monitored thanks to the present model.

### BRIEF DESCRIPTION OF THE DRAWINGS

A non-limiting embodiment of the present invention will be described by way of example with reference to the accompanying drawings, in which:
- figure 1 is a schematic block diagram of a packaging line comprising a predictor device for predicting defects according to one or more embodiments;
- figure 2 is a flow chart of operation steps of a method according to one or more embodiments;
- figure 3 shows a schematic block diagram of a training phase of a machine learning model according to one or more embodiments;
- figure 4 shows a schematic block diagram of a validation phase of a machine learning model according to one or more embodiments; and
- figure 5 exemplifies steps of the method during a training phase of the machine learning model.

### BEST MODE FOR CARRYING OUT THE INVENTION

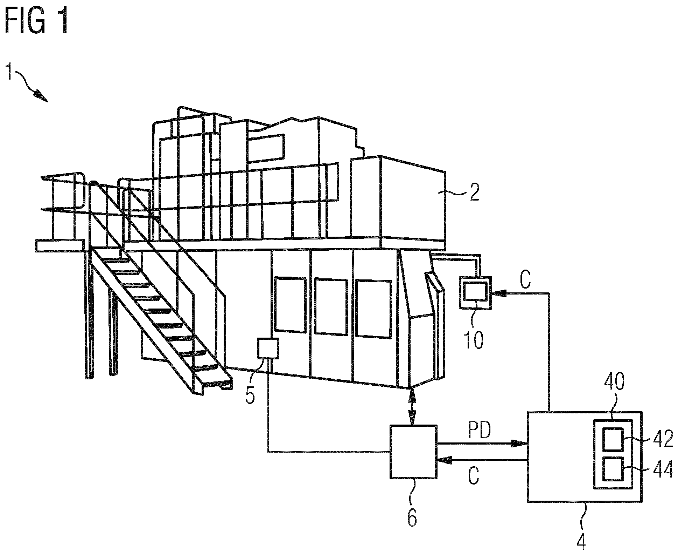

Figure 1 shows a schematic block diagram of a packaging line 1 according to one or more embodiments. The packaging line 1 comprises one or more packaging machines, as non-limiting example in the figures a filling machine 2, configured for producing packages 3 from a tube of packaging material filled with pourable (food) product. It will be appreciated that, although only the filling machine 2 is depicted in the figures, the packaging line 1 may comprise a plurality of machines and devices configured for transport and production of packages 3 according to the general knowledge of a skilled person, e.g. different types of filling machine creating packages from blanks or a tube of packaging material, downstream treatment equipment or a warehouse for transport and/or storage of reels of packaging material and/or packages 3. Furthermore, the discussed solution may be applied for any packaging plant, including any processing machine, and for any kind of pourable food product.

The packaging line 1 comprises a predictor device 4 configured for predicting defects on packages 3 produced during operation of the packaging line 1. In other words, the predictor device 4 may be configured for identifying defective packages 3 that are produced in the packaging line 1 and/or identifying trends that may lead to such defects being produced in the future.

The predictor device 4 comprises a processing unit 40 configured to carry out the method of predicting the defects on the packages 3 according to one or more embodiments. The predictor device 4 and/or the processing unit 40 may be positioned locally at the packaging line 1 and/or remotely (in a remote server or in the "cloud") . Accordingly, the packaging line 1 can include remote computing.

The packaging line 1 may comprise a plurality of sensors 5 positioned along the length thereof. Although only a sensor 5 is depicted in the figures, it will be appreciated that a plurality of sensors 5 may be present, not only at the filling machine 2 but along one or more machines or devices of the packaging line 1. The plurality of sensors 5 may be configured to monitor the operation of the packaging line 1 and/or an environment in which the packaging line 1 operates.

The packaging line 1 may comprise actuators configured to perform operations as a function of operative signals, e.g. indicative of settings of the packaging line 1 and/or events in the packaging line 1. Just for example, the actuators may comprise sealing equipment, rollers, final folding equipment etc. within the filling machine 2. It will be appreciated that the actuators may be present all along the packaging line 1.

The packaging line 1 may comprise a control unit 6 configured to control the operation of the packaging line 1. The control unit 6 may be connected, e.g. directly or indirectly, to the plurality of sensors 5 and/or the plurality of actuators. The control unit 6 may be configured to control the actuators and/or the plurality of sensors 5.

The predictor device 4 may be connected (e.g. directly or indirectly) to the control unit 6. Optionally, the predictor device 4 may be connected, e.g. directly or indirectly, to the plurality of sensors 5 to receive sensor signals directly therefrom.

The processing unit 40 is configured to apply a machine learning model 42, e.g. a trained machine learning model, in particular a CNN (Convolutional Neural Network) algorithm. The machine learning model 42 may output (real-time) defect prediction of produced packages 3 based on the production data PD associated to the packaging line 1.

The machine learning model may be a neural network. The machine learning model may be a deep learning model. The deep learning model should be understood to be a model based on deep learning. Deep learning should be understood to be machine learning in which hypotheses take the form of complex algebraic circuits with tunable connection strengths. The word "deep" refers to the fact that the circuits are typically organized into many layers, which means that computation paths from inputs to outputs have numerous layers.

One or more embodiments thus relates to a computer-implemented method of supporting an operation of the packaging line 1 producing packages 3, e.g. implemented in the processing unit 40 of the predictor device 4. The method may be performed for quality monitoring the production of the packages 3 in the packaging line 1, for predicting defects in the packages 3 and/or adjusting the operation of the packaging line 1 based on such defects. The packaging line 1 may be configured to produce packages at high speeds, e.g. at least 8000 packages per hour, preferably at least 12000 packages per hour, even more preferably at least 24000 packages per hour.

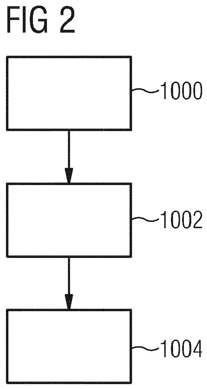

The method comprises, see e.g. the flow chart in figure 2:
- 1000, receiving the production data PD automatically collected during the operation of at least part of the packaging line 1, e.g. of a filling machine of the packaging line 1,
- 1002, applying the machine learning model 42, e.g. in the processing unit 40, and
- optionally, 1004, transmitting, as a function of a prediction of the machine learning model 42, a control instruction C indicative of an adjustment of the operation of the packaging line 1.

In particular, the machine learning model 42 receives as an input the production data PD and outputs a prediction of defects on packages 3 produced in the packaging line 1. The defects may comprise physical defects present on the packages 3. The machine learning model 42 may predict the presence or absence of defects on the packages 3 and optionally a type of defect.

The machine learning model 42 has been trained by means of reference production data RPD indicative of defects (e.g. present or absent) on reference packages associated with the reference production data RPD. For example, reference packages may be produced in a reference production line during a training phase. The reference packages may be analysed and one or more defects (i.e. presence, absence and optionally type of defect) may be identified on the reference packages. The connected reference production data RPD are indicative of the production of the reference packages.

That is, subsets of reference production data RPD may be associated with respective defects within a plurality of defects. In particular, the reference production data RPD may comprise annotations and labels associated with known defects.

According to an aspect of one or more embodiments, the method may comprise applying, 1002, the machine learning model 42 independently of receiving image data, e.g. of the produced packages. Accordingly, the prediction may be dependent on data indicative of the totality of produced packages in the packaging line 1. For example, in case of visual inspection data, only a portion of the packages can be inspected insofar as the visual acquisition times are slower than the production time of the packages.

Advantageously, this way a quality check is possible even considering the high speeds of the packaging line.

The production data PD may comprise raw data, e.g. not human interpreted. It will be appreciated that the production data PD may undergo a pre-processing step before being input to the machine learning model 42. However, such pre-processing is done merely to present the machine learning model 42 with a known type of input data and not in order to perform a first classification with human aid.

In other words, during normal operation of the packaging line 1, the production data PD may be transmitted in real-time to the processing unit 40 to make a prediction.

The production data PD may comprise sensor signals received from the plurality of sensors 5, and/or signals indicative of settings or parameters of the packaging line 1 and/or signals indicative of events in the operation of the packaging line 1 (e.g. collected in the control unit 6). In other words, the production data PD may be related to any parameter associated with the chain of production of the packages 3, such as settings and/or sensor data in the packaging machines. The production data PD may also relate to relevant events occurring in the same packaging line 1, for example the start/stop of corresponding packaging machines (e.g. the filling machine 2) or the operating and downtime phases of the same packaging machines; recipe changes or other changes in the packaging machine conditions.

Furthermore, the production data PD may comprise temperature, pressure, product flow rate and level values (e.g. relating to the food product within the packages 3 or relative to the level of product in the tube), valve positions, set points and in general data associated with any parameter relevant to packaging machine operation and configurations.

In rule-based models, the packaging line 1 may comprise pre-determined defective ranges. If the production data falls within the defective ranges, the rule-based model may transmit an alarm or similar in order to alert the user of a possible defect in the production of packages. It will be appreciated that this approach may be effective only in case of a user-driven mapping of possible rules and correlated defects. As such, the models may fail to detect defects produced in case of production data falling outside the anomaly ranges.

According to one or more embodiments, the production data PD may comprise anomaly production data, i.e. data that falls outside of pre-defined production data ranges indicative of defect-free production of packages 3.

Such anomaly production data may comprise data falling within defective ranges. The anomaly production data may comprise data falling outside the defective ranges as well as defect-free ranges, as previously defined.

Furthermore, the production data PD may comprise production data PD relating to a real-time interval as well as production data PD relating to a time interval preceding (i.e. earlier than) the real-time interval.

For example, for each package considered, the real-time interval may comprise a time interval between introduction in the packaging line 1 of the portion of the web of packaging material comprising the package and extraction of the final package from the packaging line 1.

The production data PD relating to the preceding time interval may be recorded and/or stored. The production data PD relating to the preceding time interval may comprise data received (acquired) between t=0s and t= -30 minutes or t= - 1 hour, wherein t=0s represents an instant of application of the machine learning model 42. Advantageously, the use of previous/preceding data may render the prediction more accurate.

According to an aspect of one or more embodiments, the machine learning model 42 may further receive as an input additional data, indicative of food product filled into the packages 3 and/or a packaging material used for producing the packages 3. Such additional data may provide more information on the quality of the package. For example, a product filling the packages or the type of packaging material may influence a transversal sealing of the packages. Accordingly, the parameters and settings of the packaging line 1 may take into consideration such variables.

In one or more embodiments, the reference production data RPD may be associated with presence or absence of defects. Optionally, the reference production data RPD may be associated at least partially with different types of defects. The types of defects may comprise for example: no defect, wrinkles in the material of the packages 3, unsealed flaps of the packages 3, torn or cloudy pre-punched holes in the packages 3, dents in the packages 3, delamination in opening areas of the packages 3, and similar.

The reference production data RPD may be associated with confidence values, the confidence values indicative of probabilities of the association between the reference production data RPD and the presence/absence or type of defect being accurate. For example, in case of a set of reference production data RPD associated with a particular defect, the confidence value provides information on the probability that the defect that has been associated to the data is actually present and correct. This is because the reference production data RPD may be automatically associated with defects, as will be better described in the following. That is, the annotation and labelling of the reference production data RPD is not performed manually.

In one or more embodiments, the reference production data RPD, with which the model is trained, comprises production data indicative of the operation of the packaging line 1 at a time of production of a corresponding package 3 and production data indicative of the operation of the packaging line 1 before production of said corresponding package 3. That is, the model is trained both using the reference production data indicative of the production of a defect as well as the production data leading to the moment of the defect production (e.g. previous 30 minutes or 1 hour before the production of the defect). This way, the machine learning model 42 may be able to predict a trend of anomalous behaviour and predict the creation of defects before it happens.

According to one or more embodiments, the prediction may thus be indicative of presence or absence of defects on the packages 3 produced in the packaging line 1, in particular at a certain instant. That is, thanks to the prediction and relative time instant, a defective package 3 can be identified among the plurality of packages 3 produced.

The prediction may comprise a type of defect of a defective package 3 being produced, e.g. at a certain instant. In particular, the machine learning model 42 may be configured to predict the presence of a defect and to classify the identified defect according to different types of defects. As previously discussed, the types of defects may comprise for example: no defect, wrinkles in the material of the packages 3, unsealed flaps of the packages 3, torn or cloudy pre-punched holes in the packages 3, dents in the packages 3, delamination in opening areas of the packages 3, and similar.

The prediction may comprise a probability of a defective package 3 being produced, e.g. at a certain instant. Advantageously, the probability may provide information on the accuracy of the prediction, i.e. how certain is the predictor device 4 that the defect is present and/or on the type of defect.

The prediction may comprise a probability of defective packages 3 being produced following the prediction. In particular, the prediction may include a trend indicative of defective packages that will be produced by the packaging line 1 if no adjustment is performed to the operation thereof.

For this purpose, the production data PD may comprise production data PD relating to a real-time interval as well as production data PD (e.g. recorded and/or stored) relating to a time interval preceding (i.e. earlier than) the real-time interval, e.g. from a certain time interval (30 minutes or 1 hour before the instant of prediction).

The prediction may comprise a portion of the received production data PD that permitted the detection of the defect. Advantageously, this may help identify the settings and/or actuator and/or event and/or feature that may be adjusted as a function of the prediction.

According to one or more embodiments, the control instruction C may comprise one or more of:
- the portion of the received production data PD outputted with the prediction,
- an interruption signal configured to interrupt the operation of the packaging line 1,
- a correction signal configured to correct at least one setting and/or at least one parameter of at least one actuator of the packaging line 1, and/or
- an alert signal configured to alert an operator of the packaging line 1 of the prediction.

The control instruction C may be transmitted to an operator of the packaging line 1 (e.g. via a suitable user interface 10) and/or (e.g. directly) to the control unit 6 of the packaging line 1. The same control instruction C may also be used to plan maintenance operations.

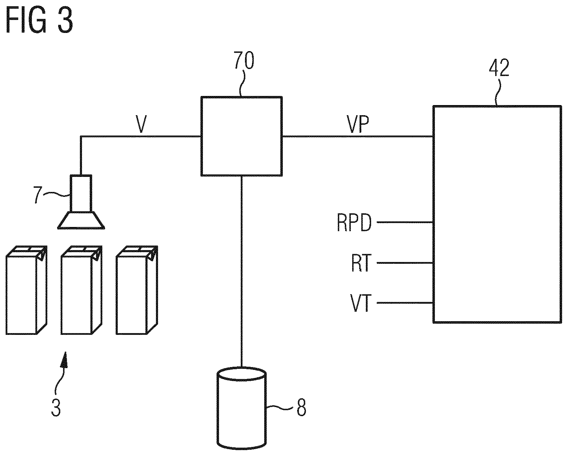

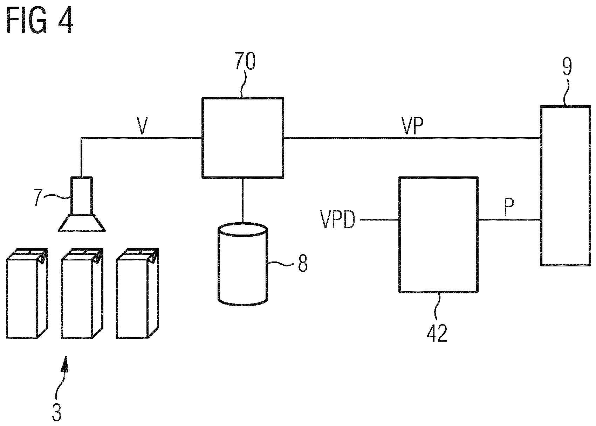

The machine learning model 42 may be trained and validated before use during normal operation. The training and validation of the machine learning model 42 are exemplified in figures 3 and 4, respectively.

During training and validation, the packaging line 1 may comprise an image acquisition device 7 to acquire images V of produced packages 3 and an image analysis unit 70 configured to identify defective packages 3 from these images V. The image analysis unit 70 may perform image recognition based on known image recognition algorithms as well as a database 8 of images of known defects, e.g. labelled according to types of defects. The image analysis unit 70 may be positioned locally at the packaging line 1 and/or remotely (in a remote server or in the "cloud").

A reference packaging line (e.g. the packaging line 1 and/or one or more further packaging lines) may be operated to produce reference packages 3 during a training operation phase (i.e. a reference production phase), during which reference production data RPD is collected and at least a portion of the reference packages 3 produced are inspected (e.g. manually and/or by means of the image acquisition device 7) to identify presence or absence of a plurality of defects VP, optionally also types of defects.

During the training operation phase, also timestamps may be collected, e.g. synchronized by means of a master clock: a plurality of first timestamps VT associated to the plurality of defects identified and second timestamps RT associated with the reference production data RPD.

One or more embodiments may comprise a method of generating a training dataset for a machine learning model 42, such as the one previously described, outputting a prediction of defects on packages 3 produced in the packaging line 1 as a function of the production data PD indicative of the operation of the packaging line 1. The method comprises:
- receiving reference production data RPD associated to the production of reference packages 3 produced in a reference packaging line 1 during a reference production phase,
- receiving one or more defect VP identified in a reference package 3 (i.e. more than one defect may be present on a single package),
- receiving a first timestamp VT associated with the at least one defect,
- receiving second timestamps RT associated with the reference production data RPD.

It will be appreciated that, even if referred to one or more defects on a reference package for simplicity, the same method may be applied to a plurality of defects on a plurality of reference packages.

The method, e.g. implemented in the image analysis unit 70, may comprise identifying the one or more defects VP in at least one acquired image V of the reference package 3. In this case, the first timestamps VT may be indicative of the acquisition time of the image V.

The one or more defects VP may comprise a confidence value associated with each defect, that is a probability that the defect in the image is accurately identified and/or classified.

It will be appreciated that the one or more defects VP does not necessarily include image data. Each defect in the plurality of defects VP may include a presence or absence of defect, optionally a type of defect.

During training, the machine learning model 42 may thus be configured to receive the defects VP, the plurality of first timestamps VT associated with said plurality of defects, the reference production data RPD, and the second timestamps RT.

The method may comprise:
- for each reference package, identifying in the reference production data RPD, as a function of the second timestamps RT and the associated first timestamp VT, a subset of reference production data RPD indicative of production of the reference package 3, and
- generating the training dataset comprising the subset of reference production data RPD as well as the at least one defect VP.

There is also described a method of training the machine learning model 42 based on the identified subsets of reference production data RPD and the associated at least one defect. The method may comprise:
- receiving the training dataset; and
- training the machine learning model (42) by adjusting weights of the machine learning model (42) as a function of the training dataset.

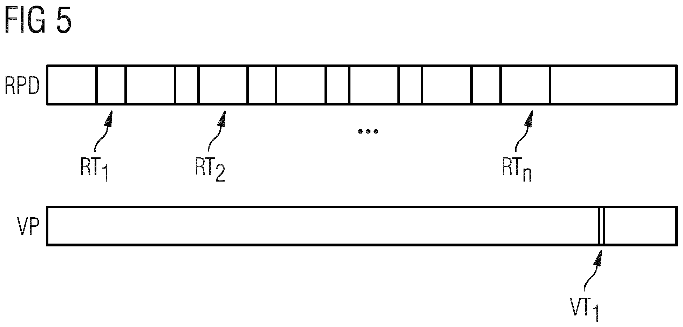

An example of the step of identifying the subset of reference production data RPD is shown in figure 5. The reference production data is exemplified as a single stream of data, for the sake of simplicity. Of course, the reference production data RPD comprises a plurality of signals as previously described.

During inspection of a package 3, one or more defects may be identified at a certain first timestamp VT1. Based on the certain first timestamp VT1 it is possible to calculate certain second timestamps RT1...RTN that relate to the production of the package 3, e.g. RT1 may be relative to the longitudinal sealing of the tube, RT2 may be relative to filling of the tube, RT3 to top and bottom transversal sealing of the package, and so on. Thanks to these timestamps, it is possible to isolate in the reference production data RPD the subset that is relative to the production and/or transport of the particular package 3 that is inspected at time VT1.

As exemplified in figure 5, only the reference production data RPD relative to the instantaneous production of the package 3 is shown. In addition, it is possible to collect preceding/previous data leading to the production of the defect, i.e. data relative to production of packages before the production of the defective package 3 under consideration.

Accordingly, the subset of reference production data RPD may comprise data indicative of the production of the respective package 3 as well as preceding data relative to the production of packages 3 prior to said respective package 3.

In particular, the timing of when the defects occur in the packaging machines and/or devices may be established. Although a defect may be detected by the imaging device 7 further down the packaging line 2 it may be possible to back-track the point in time when the defect was inflicted upon the packages 3 by tracing the aforementioned package 3 with reference to the master clock timing the entire production chain.

Advantageously, it is possible to determine production and process parameters in the packaging machines associated with the occurrence of defects, based on the time stamps. The discussed correlation may be facilitated using the solution discussed in detail in EP3633474 A1 filed in the name of the present Applicant.

The packaging line 1 may be operated to produce packages 3 during a validation operation phase, during which validation production data VPD is collected and at least a portion of the packages 3 produced are inspectioned by means of the image acquisition device 7 to identify defective packages 3.

Accordingly, one or more embodiments may relate to a method of validating the machine learning model 42 comprising parallelly applying the machine learning model 42, e.g. implemented in the processing unit 40 of the predictor device 4, and an image analysis algorithm, e.g. implemented in the image analysis unit 70, configured to identify defective packages 3 from images V acquired by means of the image acquisition device 7.

The machine learning model 42, previously trained, may receive as an input the validation production data VPD and may output predictions P on defects found in the packages 3 produced during the validation operation phase.

The image analysis unit 70 may receive images V of the packages 3 produced during the validation operation phase and may apply image analysis or recognition algorithms in order to identify defects. The image analysis unit 70 may output a signal VP comprising identified defects in these packages 3.

The method of validating the machine learning model 42 may comprise comparing, e.g. in a comparator unit 9, a performance of the machine learning model 42 and the image analysis algorithm, e.g. implemented in the image analysis unit 70, by checking whether the predictions P of the machine learning model 42 identify at least the same number of defects as the image analysis algorithm (i.e. the signal VP of the image analysis unit 70).

During normal operation, the method may comprise:
- comparing, e.g. continuously, the received production data PD to the reference production data RPD, and
- if the production data PD and the reference production data RPD differ more than a certain amount for a certain period of time (e.g. tens of minutes), retrain the machine learning model 42.

Advantageously, an input deviation monitoring may permit a more robust solution. In case a deviation is found, the machine learning model may be retrained. That is, the machine learning model may not self-train. Retraining and validation are needed for the model to be robust enough for food safety purposes.

In other words, the machine learning model 42 can be considered accurate if the production data PD fed thereto remain substantially unaltered. If the data changes, the prediction of the machine learning model 42 can become inaccurate. To avoid this, the predictor device 4 may comprise a quality unit 44 configured to perform the steps previously discussed. In addition or in alternative, the method may detect covariate shifts and/or concept drifts. For example, the method may comprise calculating a Gaussian distribution of the production data PD, and checking whether such Gaussian distribution deviates from a Gaussian distribution of the reference production data PD on which the model 42 is trained. Advantageously, thanks to the quality unit 44, the prediction device may be robust to noise.

The present description may further relate to a computer program product, loadable in the memory of at least one (electronic) processing unit (e.g. the processing unit 40 of the predictor unit 4 and/or the image analysis unit 70), and comprising instructions which, when the program is executed by a computer, cause the computer to carry out the steps of the methods according to one or more embodiments, e.g. one or more of: a method of supporting the operation of the packaging line 1, a method of generating the training dataset for the machine learning model 42, a method of training the machine learning model 42 or a method of validating the machine learning model 42.

The present description may relate to a system comprising the predictor device 4 and the image acquisition device 7, the system comprising at least one processing unit, e.g. processing unit 40 and/or image analysis unit 70, configured to carry out the steps of the methods previously described. In particular, the packaging line 1 may comprise the system during a training and validation phase of the machine learning model 42.

One or more embodiments may relate to a trained machine learning model 42 configured for use in the previously described method of supporting the operation of the packaging line, the machine learning model 42 being trained using the training dataset previously described.

Thanks to the solution according to one or more embodiments, it is possible to perform quality control of the packages produced in a packaging line in a simple and effective manner. In particular, this solution may be applied to all packages in modern packaging lines that can reach high production speeds.

Advantageously, the monitoring can be done real-time without the use of a visual inspection apparatus. For example, this may reduce a quality inspection time.

Advantageously, the solution offers a reliable and effective prediction of defects or anomalies in the formed packages, without disrupting or interfering with the packaging operations.

The machine learning model 42 was tested in order to evaluate its capacity of predicting defects on the packages, e.g. in a binary manner (good/bad).

In particular, the machine learning model 42 was used to evaluate a set of circa 5000 packages. A number of defective packages was present in the set, as well as a number of non-defective packages. It will be appreciated that the dataset is heavily skewed towards the non-defective packages insofar as defective packages are sparse. Two parameters were used in order to evaluate the performance of the machine learning model: recall and precision. T indicates the total number of correctly detected packages, FP indicates the number of false positives, i.e. packages detected as good that were actually defective, whereas FN indicates the number of false negatives, i.e. packages detected as bad that were actually non-defective. Recall was calculated as the following ratio: T/(T+FN); precision was calculated as the following ratio: T/(T+FP).

Based on the production data, the results were the following:
- in case of non-defective packages, a precision of 0,77 and a recall of 0,86 was achieved,
- in case of defective packages, a precision of 0,83 and a recall of 0,73 was achieved.

As is known from commercial packaging machines, the packaging line 1 produces packages 3 from packaging material by manipulating the packaging material, e.g. by folding and/or sealing and/or cutting the packaging material. The reference production data RPD may comprise data on the manipulation, e.g. features and/or settings and/or parameters of manipulation (sealing, cutting and/or folding) tools that operate on portions of packaging material out of which the reference packages are produced.

Such operations may stress the material which in turn may facilitate the occurrences of anomalies/defects in the resulting packages. The packaging material is opaque and/or is multi-layered. As such, detecting anomalies/defects thereon, if any, is challenging. Advantageously, thanks to the instant invention, possible defects/anomalies that may be due to the manipulation of the packaging material (sealing, folding, cutting or other) may be predicted and quantified. In particular, this may be possible even though a vision system is not present or a vision system would not be as effective in case such anomalies/defects were not immediately visible, e.g. due to the nature of the packaging material itself.

## Claims

1. A computer-implemented method of supporting an operation of a packaging line (1) producing packages (3), comprising:
- receiving (1000) production data (PD) automatically collected during the operation of at least part of the packaging line (1),
- applying (1002) a machine learning model (42), wherein the machine learning model (42) receives as an input the production data (PD) and outputs a prediction of defects on packages (3) produced in the packaging line (1), wherein the machine learning model (42) has been trained by means of reference production data (RPD) indicative of defects on reference packages associated with the reference production data (RPD).

2. The method according to claim 1, further comprising:
- transmitting (1004), as a function of said prediction, a control instruction (C) indicative of an adjustment of the operation of said packaging line (1).

3. The method according to claim 1 or 2, wherein the production data (PD) comprises anomaly production data that falls outside of pre-defined production data ranges indicative of defect-free production of packages (3).

4. The method according to any of the previous claims, wherein the machine learning model (42) further receives as an input additional data, indicative of a product filled into the packages (3) and/or a packaging material used for producing the packages (3).

5. The method according to any of the previous claims, wherein the production data (PD) comprises production data (PD) relating to a real-time interval as well as production data (PD) relating to a time interval earlier than the real-time interval.

6. The method according to any of the previous claims, wherein the reference production data (RPD) is at least partially associated with types of defects and preferably confidence values, wherein the confidence values are indicative of probabilities of the association between the reference production data (RPD) and the type of defect being accurate.

7. The method according to any of the previous claims, wherein said prediction comprises at least one of:
- a presence of a defective package (3),
- a type of defect of a defective package (3),
- a probability of a defective package (3) being produced at a certain instant,
- a probability of defective packages (3) being produced following the prediction, and/or
- a portion of the received production data (PD) indicative of the defect.

8. The method according to any of the previous claims, comprising applying (1002) the machine learning model (42) at least partially independently of receiving image data.

9. The method according to any of the previous claims 2-8, wherein the control instruction (C) comprises at least one of:
- an interruption signal configured to interrupt the operation of the packaging line (1),
- a correction signal configured to correct a setting and/or a parameter of at least one actuator of the packaging line (1), and/or
- an alert signal configured to alert an operator of the packaging line (1).

10. The method according to any of the previous claims, comprising:
- comparing the received production data (PD) to the reference production data (RPD), and
- if the production data (PD) and the reference production data (RPD) differ more than a certain amount for a certain period of time, retraining the machine learning model (42).

11. A method of generating a training dataset for a machine learning model (42) configured for outputting a prediction of defects on packages (3) produced in a packaging line (1) as a function of production data (PD) indicative of the operation of the packaging line (1), the method comprising:
- receiving reference production data (RPD) associated to the production of reference packages (3) produced in a reference packaging line (1) during a reference production phase,
- receiving at least one defect (VP) identified in a reference package (3),
- receiving a first timestamp (VT) associated with the at least one defect,
- receiving second timestamps (RT) associated with the reference production data (RPD),
- for each reference package, identifying in the reference production data (RPD), as a function of the second timestamps (RT) and the associated first timestamp (VT), a subset of reference production data (RPD) indicative of production of said reference package (3),
- generate the training dataset comprising the subset of reference production data (RPD) as well as the at least one defect (VP).

12. The method according to claim 11, comprising:
- receiving an image (V) of the reference package (3) acquired by means of an image acquisition device (7), and
- identifying the at least one defect (VP) in the acquired image (V),
wherein the first timestamp is indicative of the acquisition time of the image (V).

13. A method of training a machine learning model (42) configured for use in the method of any of claims 1 to 10, the method comprising:
- receiving the training dataset of claim 11 or claim 12; and
- training the machine learning model (42) by adjusting weights of the machine learning model (42) as a function of the training dataset.

14. A method of validating a machine learning model (42) configured for use in the method of any of claims 1 to 10, the method comprising:
- parallelly applying the machine learning model (42) and an image analysis algorithm configured to identify defective packages (3) from images (V) acquired by means of an image acquisition device (7), and
- comparing (9) a performance of the machine learning model (42) and the image analysis algorithm by checking whether the predictions (P) of the machine learning model (42) identify at least the same number of defects as the image analysis algorithm.

15. A predictor device (4) comprising a processing unit (40) configured to carry out the method according to any of claims 1 to 11 or 13.

16. A system comprising the predictor device (4) according to claim 15 and an image acquisition device (7), the system comprising at least one processing unit (40, 70) configured to carry out the method according to any of claims 1 to 14.

17. A computer program product, loadable in the memory of at least one processing unit and comprising instructions suitable for performing the steps of the method according to any of claims 1 to 14.

18. A packaging line (1) for producing packages (3) comprising a predictor device (4) according to claim 15.

19. A trained machine learning model (42) configured for use in the method of any of claims 1 to 10 and/or being trained using the training dataset of claim 11 or claim 12.
